# EUROPÄISCHE PATENTSCHRIFT

(11) **EP 3 361 919 B1**
(45) Veröffentlichungstag und Bekanntmachung des Hinweises auf die Patenterteilung: **04.03.2020**
(21) Anmeldenummer: 16774626.2
(22) Anmeldetag: 31.08.2016
(51) Int. Cl.: A47J 31/46

(54) **GETRÄNKEZUBEREITUNGSVORRICHTUNG MIT SCHEIBENVENTIL SOWIE BETRIEBSVERFAHREN**
BEVERAGE PREPARATION DEVICE WITH DISK VALVE AND OPERATING METHOD
DISPOSITIF DE PRÉPARATION DE BOISSON COMPRENANT UNE SOUPAPE À DISQUE ET PROCÉDÉ DE FONCTIONNEMENT

(30) Priorität: 16.10.2015 DE 102015117628
(43) Veröffentlichungstag der Anmeldung: 22.08.2018
(73) Patentinhaber: Eugster/Frismag AG, 8580 Amriswil (CH)
(72) Erfinder: FISCHER, Daniel, 8590 Romanshorn (CH); SONDERERGGER, Remo, 8274 Tägerwilen (CH)
(74) Vertreter: Patentanwälte Behrmann Wagner PartG mbB
(86) Internationale Anmeldenummer: PCT/EP2016/070470
(87) Internationale Veröffentlichungsnummer: WO 2017/063784

(56) Entgegenhaltungen:
- EP-B1- 1 300 105
- EP-B1- 1 916 459
- WO-A1-2014/072379

## Beschreibung

Die Erfindung betrifft eine Getränkezubereitungsvorrichtung gemäß Anspruch 1, insbesondere eine Kaffeemaschine, noch weiter bevorzugt mit einer Erwärmungs- und/oder Aufschäumeinrichtung für Milch, mit einem Scheibenventil, umfassend ein Ventilgehäuse sowie ein darin angeordnetes Scheibenpaket mit einer, mindestens eine, bevorzugt als Fluideingangsöffnung ausgebildete, Fluidöffnung für Fluid, insbesondere Wasser und/oder Dampf, aufweisenden, vorzugsweise keramischen, Deckscheibe und mindestens einer auf einer von einer äußeren Stirnseite der Deckscheibe abgewandten Seite der Deckscheibe angeordneten Steuerscheibe, wobei die Steuerscheibe manuell oder mittels eines Antriebs relativ zur Deckscheibe zwischen unterschiedlichen Schaltstellungen (zur Einstellung unterschiedlicher Fluidverläufe) um eine Rotationsachse rotierbar ist. Mittels der Steuerscheibe sind also drehwinkelabhängige Schaltstellungen des als Mehrwegeventil ausgebildeten Scheibenventils einstellbar, wobei abhängig von der Drehwinkelstellung Kanäle bzw. Durchgänge des Ventils geöffnet oder geschlossen sind.

Ferner betrifft die Erfindung ein Betriebsverfahren gemäß Anspruch 13.

In Getränkezubereitungsvorrichtungen, insbesondere Kaffeemaschinen mit Milch-Erwärmungs- und/oder Aufschäumfunktion, werden ein Scheibenpaket umfassende keramische Scheibenventile eingesetzt, die als Mehrwegeventile drehwinkelabhängig eine ausgewählte Ableitung eines Heißwasser- und/oder Dampferzeugers mit einer ausgewählten Zuleitung eines Funktionselementes, beispielsweise einer Düse verbinden können. Die bekannten keramischen Scheibenventile in Getränkezubereitungsvorrichtungen bestehen in der Regel aus zwei ortsfest angeordneten Keramikscheiben mit Durchlassöffnungen und einer sandwichartig zwischen den äußeren drehfesten Keramikscheiben angeordneten Steuerscheibe, welcher ein elektromotorischer Antrieb zugeordnet ist, um die Steuerscheibe relativ zu den ortsfesten Scheiben rotieren und damit bestimmte Relativdrehwinkeleinstellungen vornehmen zu können, wobei in den unterschiedlichen Drehwinkelstellungen unterschiedliche Fluidwege geöffnet und/oder geschlossen sind.

In der EP 1 300 105 B1 ist beschrieben, dass die Keramikscheiben mittels einer Feder gegeneinander kraftbeaufschlagt werden, um für eine ausreichende Dichtheit Sorge zu tragen.

In der EP 1 916 459 B1 ist ebenfalls eine Getränkezubereitungsvorrichtung mit Scheibenventil beschrieben. Bei dem bekannten Steuerventil entspricht die Querschnittsfläche der Zu- und Ableitungen zu den Querschnittsflächen der diesen zugeordneten Fluidöffnungen in den ortsfesten Keramikscheiben.

Aus der DE 44 27 745 A1 ist ein Mehrscheiben-Verteilerventil für Kaffee- oder Espressomaschinen bekannt, bei dem axial benachbart zu einer Deckscheibe ein Dichtelement mit Durchgangsöffnungen angeordnet ist, die mit Fluidöffnungen in der Deckscheibe fluchten. Dabei ist die Querschnittsfläche der Durchgangsöffnungen im Dichtelement geringfügig größer bemessen als die Querschnittsfläche der zugeordneten Fluidöffnung in der Deckscheibe. An dem Dichtelement sind im Bereich der Durchgangsöffnungen Dichtlippen ausgebildet, die eine effiziente Anpressung der Dichtscheibe an die Deckscheibe gewährleisten sollen.

Zum weiteren Stand der Technik werden die DE 10 2008 041 122 A1 und die DE 27 53 264 A1 genannt.

Bei den bekannten Keramikscheiben ist der Anpressdruck und damit die Dichtkraft in sämtlichen Betriebssituationen konstant und kann über die Lebensdauer der Getränkezubereitungsvorrichtung aufgrund schwindender Federkräfte von eingesetzten Anpressfedern nachlassen, was Dichtigkeitsprobleme zwischen den einzelnen Scheiben bzw. der darin ausgebildeten Kanäle zur Folge haben kann.

Ausgehend von dem vorgenannten Stand der Technik liegt der Erfindung die Aufgabe zugrunde, eine Getränkezubereitungsvorrichtung mit einem verbesserten Scheibenventil anzugeben, welche sich selbsttätig an unterschiedliche Betriebszustände der Getränkezubereitungsvorrichtung anpasst und eine verlässliche Dichtheit über die Lebensdauer der Getränkezubereitungsvorrichtung sicherstellt.

Ferner besteht die Aufgabe darin, ein Betriebsverfahren für eine entsprechend verbesserte Getränkezubereitungsvorrichtung anzugeben.

Diese Aufgabe wird hinsichtlich der Getränkezubereitungsvorrichtung mit den Merkmalen des Anspruchs 1 gelöst. Dabei ist erfindungsgemäß vorgesehen, dass außerhalb der Fluidöffnung eine Druckkammer ausgebildet ist, innerhalb derer mittels des sie durchströmenden Fluids, insbesondere in sämtlichen Schaltschaltungen des Scheibenventils, ein Anpressdruck entlang der Rotationsachse auf die äußere (von der Steuerscheibe abgewandte) Stirnseite der Deckscheibe in Richtung Steuerscheibe ausübbar ist, und dass die Druckkammer in radialer Richtung bezogen auf die Rotationsachse von einer, bevorzugt als umfangsgeschlossene Richtungdichtung ausgebildeten Elastomerdichtung begrenzt ist, die sich in axialer Richtung auf der Deckscheibe abstützt. Dabei ist es entscheidend, dass der von dem die Druckkammer durchströmenden Fluid erzeugbare Anpressdruck und damit die auf die Deckscheibe in einem Bereich benachbart zur Fluidöffnung wirkende hydraulische (Anpress-)Druckkraft ausreichend groß ist, um eine ausreichende bzw. gewünschte Dichtwirkung zwischen der Deckscheibe und der Steuerscheibe (und ggf. weiteren Scheiben) zu gewährleisten. Um dies zu erreichen ist erfindungsgemäß vorgesehen, dass eine von der Elastomerdichtung umschlossene Druckkammerquerschnittsfläche und/oder der mit hydraulischem Druck beaufschlagbare Druckflächenabschnitt der äußeren Deckscheibe benachbart zur Fluidöffnung mindestens 20 % der axialen Projektionsfläche der Deckscheibe entspricht und/oder dass die Druckkammerquerschnittsfläche und/oder der mit hydraulischem Druck beaufschlagbare Druckflächenabschnitt der äußeren Deckscheibe benachbart zur Fluidöffnung größer ist, insbesondere mindest doppelt so groß ist, wie eine Fluidöffnungsquerschnittsfläche der Fluidöffnung.

Hinsichtlich des Betriebsverfahrens wird die Aufgabe mit den Merkmalen des Anspruchs 13 gelöst. Erfindungsgemäß ist vorgesehen, dass die Druckkammer mit Fluid beaufschlagt und dadurch die Deckscheibe axial in Richtung auf die Steuerscheibe gepresst wird.

Vorteilhafte Ausgestaltungen der Erfindung sind in den Unteransprüchen angegeben.

In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, in einem Bereich vor einer Fluidöffnung in einer Deckscheibe des Scheibenpaktes eine Druckkammer auszubilden, die sich in radialer Richtung über den stirnseitigen Rand der, bevorzugt als Fluideingangsöffnung (Zuströmöffnung) ausgebildeten Fluidöffnung, insbesondere für Wasser und/oder Heizdampf erstreckt, so dass sich das Fluid in einem Bereich benachbart der Fluidöffnung (mittelbar oder unmittelbar) axial an der äußeren Stirnseite der Deckscheibe abstützen bzw. diese mit einem hydraulischen Anpressdruck in Richtung Steuerscheibe beaufschlagen kann, der dann wiederum für eine entsprechende Dichtkraft, mit welcher die Deckscheibe gegen die Steuerscheibe gepresst wird, Sorge trägt. Die vorerwähnte Druckkammer, welche auf der von der Deckscheibe abgewandten Axialseite bevorzugt von dem Ventilgehäuse begrenzt wird, wird in radialer Richtung nach außen begrenzt von einer, insbesondere als umfangsgeschlossene Ringdichtung ausgebildeten Elastomerdichtung, welche sich in axialer Richtung auf der Deckscheibe abstützt. Dabei übt die Elastomerdichtung bevorzugt, verursacht durch ihre, vorzugsweise realisierte, Vorspannung bzw. Dichtungspressung eine Grundlast bzw. einen Basisdruck auf die Deckscheibe auf, welcher für eine gewisse Druckbeaufschlagung auch in Betriebszuständen der Getränkezubereitunsvorrichtung Sorge trägt, in denen die Druckkammer nicht mit hydraulischem Fluiddruck, inbesondere mittels einer Pumpe oder sonstigen Fördermitteln der Getränkezubereitungsvorrichtung beaufschlagt ist. Wesentlich ist, dass durch das erfindungsgemäße Vorsehen der Druckkammer in einem Bereich benachbart zur Deckscheibe eine hydraulische Fluiddruckbeaufschlagung der Deckscheibe in Richtung Steuerscheibe möglich ist, so dass der auf die Deckscheibe wirkende Anpressdruck nicht wie im Stand der Technik in allen Betriebszuständen der Getränkezubereitungsvorrichtung konstant ist sondern unmittelbar abhängig ist, insbesondere proportional ist zum hydraulischen Druck des in der Druckkammer befindlichen Fluids, insbesondere Wasser und/oder Dampf, so dass selbsttätig die Dichtkraft an die jeweilige Betriebssituation angepasst wird. Wird nämlich der Fluiddruck erhöht, steigt automatisch auch der Anpressdruck und damit die Dichtkraft auf die aneinander anliegenden Scheiben des Scheibenpaktes, so dass immer dann, wenn aufgrund eines erhöhten Fluiddrucks eine erhöhte Dichtkraft gewünscht oder erforderlich ist, diese automatisch über das Fluid selbst erzeugt wird. Wie bereits erwähnt ist es zweckmäßig, wenn die Deckscheibe eine Zustromscheibe ist, dass also über die Fluideingangsöffnung Fluid, insbesondere Wasser, bevorzugt Heißwasser und/oder Dampf von einem Heißwasser- und/oder Dampferzeuger, insbesondere Durchlauferhitzer oder alternativ gekühltes Wasser aus einem Durchlaufkühler zur Herstellung von Kaltgetränken, zuströmt, um für den hydraulischen Druck in der Druckkammer und damit die Anpresskraft auf die Deckscheibe und damit wiederum für die Dichtkraft Sorge zu tragen. Grundsätzlich möglich ist jedoch auch die Druckkammer ausgangsseitig anzuordnen, wenn sichergestellt ist, dass es im Betrieb der Getränkezubereitungsvorrichtung auch in einer ausgangsseitigen Druckkammer zu einem ausreichenden Staudruck bzw. hydraulischen Druck kommt, der dafür verantwortlich ist, dass die Deckscheibe in Richtung der benachbarten, bevorzugt unmittelbar anliegenden Steuerscheibe druckkraftbeaufschlagt wird.

Besonders bevorzugt ist die Elastomerdichtung dabei derart auf die im Betrieb auftretenden Drücke ausgelegt, dass diese eine aus einer hydraulischen Druckbeaufschlagung der Druckkammer resultierende Höhendifferenz, insbesondere Höhenzunahme der Druckkammer in axialer Richtung (elastisch bzw. dynamisch) ausgleichen kann.

Um für einen ausreichend großen (hydraulischen) Anpressdruck und damit für eine große Dichtkraft Sorge zu tragen ist erfindungsgemäß vorgesehen, dass eine von der Elastomerdichtung umschlossene (sich in radialer Richtung erstreckende bzw. in einer Radialebene zur Rotationsachse liegende) Querschnittsfläche und/oder ein mit Fluiddruck axial mittelbar oder unmittelbar beaufschlagbarer Druckflächenabschnitt (genauer deren axiale Projektionsfläche) der äußeren Stirnseite der Deckscheibe benachbart zur Fluidöffnung mindestens 20%, bevorzugt mindestens 30%, noch weiter bevorzugt mindestens 40%, ganz besonders bevorzugt mindestens 50% der axialen Projektionsfläche der Deckscheibe entspricht und/oder dass die (sich in radialer Richtung bezogen auf die Roatationsachse erstreckende) Druckkammerquerschnittsfläche und/oder der mit hydraulischem Druck mit Fluid aus der Druckkammer beaufschlagbare Druckflächenabschnitt (d.h. deren axiale Projektionsfläche) der äußeren Deckscheibe benachbart zur Fluidöffnung größer ist als eine Fluidöffnungsquerschnittsfläche (genauer als die axiale Projektionsfläche der Fluidöffnung), bevorzugt mindestens doppelt so groß ist, besonders bevorzugt mindestens dreimal so groß ist, noch weiter bevorzugt mindestens fünfmal so groß ist, ganz besonders bevorzugt mindestens zehnmal so groß ist, wie diese Fluidöffnungsquerschnittsfläche bzw. axiale Projektionsfläche.

In Weiterbildung der Erfindung ist mit Vorteil vorgesehen, dass dem Scheibenventil Mittel zum Variieren des hydraulischen Drucks des Fluids in der Druckkammer zur gleichzeitigen Einstellung bzw. Variation des Anpressdrucks auf die äußere Stirnseite der Deckscheibe zugeordnet sind, insbesondere umfassend mindestens eine in Strömungsrichtung vor dem Scheibenpaket angeordnete Fördereinrichtung, bevorzugt einer Förderpumpe, beispielsweise einer Schwingankerpumpe.

Damit mittelbar oder bevorzugt unmittelbar von dem in der Druckkammer befindlichen Fluid ein Anpressdruck auf die äußere Stirnseite der Deckscheibe ausübbar ist, ist in Weiterbildung der Erfindung vorgesehen, dass eine entlang der Rotationsachse betrachtet axiale Projektionsfläche der Druckkammer zumindest abschnittsweise mit einer axialen Projektionsfläche der Deckscheibe in einem Bereich benachbart der Fluideingangsöffnung zusammenfällt, wobei die aus dem Anpressdruck resultierende axiale Dichtkraft mit zunehmender Überlappung steigt.

Wie bereits angedeutet ist es besonders bevorzugt, wenn das von der Elastomerdichtung umschlossene Fluid unmittelbar die Deckscheibe in einem Bereich benachbart zur Fluidöffnung kontaktiert bzw. druckbeaufschlagt, wozu es notwendig ist, dass unmittelbar die äußere Stirnseite der Deckscheibe die Druckkammer in axialer Richtung mit einem von der Elastomerdichtung umschlossenen Druckflächenabschnitt begrenzt. Grundsätzlich ist auch eine alternative Ausführungsform umsetzbar, bei der zwischen dem in der Druckkammer befindlichem Fluid und der äußeren Stirnseite eine Schicht, beispielsweise aus Elastomermaterial ausgebildet ist, wobei diese Schicht (Druckübertragungsschicht) so ausgestaltet sein kann, dass diese aufgrund des hydraulischen Drucks in der Druckkammer deformierbar und somit ein Anpressdruck auf die äußere Stirnfläche der Deckscheibe weitergebbar bzw. übertragbar ist. Eine solche Deckschicht kann beispielsweise einteilig mit der ringförmigen Elastomerdichtung, die die Druckkammer in radialer Richtung nach außen begrenzt ausgebildet sein. Eine solche, insbesondere einteilig mit der Elastomerdichtung ausgebildete Schicht kann auch auf der von der äußeren Stirnseite der Deckscheibe angeordneten Seite der Druckkammer vorgesehen sein, insbesondere zwischen dem in der Druckkammer befindlichen Fluid und dem Ventilgehäuse. Besonders bevorzugt ist es jedoch auch hier, wenn das Ventilgehäuse in axialer Richtung die Druckkammer unmittelbar begrenzt.

Im Hinblick auf die Anordnung der, insbesondere als Ringdichtung ausgebildeten Elastomerdichtung zur radialen Begrenzung (bezogen auf die Rotationsachse) der Druckkammer dienenden Elastomerdichtung ist es bevorzugt, diese konzentrisch zur Rotationsachse anzuordnen.

Grundsätzlich ist es bevorzugt, wenn eine von der Elastomerdichtung gebildete Druckkammerinnenwand (insbesondere Innenmantelfläche) mit Radialabstand zu einem Fluidöffnungsrand der Fluidöffnung in der Deckscheibe angeordnet ist.

Insgesamt ist es von Vorteil, wenn in die Druckkammer nur eine gehäuseseitige Zuleitung ausmündet oder alternativ eine gehäuseseitige Ableitung ausmündet, wobei es grundsätzlich auch möglich ist, die Druckkammer mithilfe von separaten Zuleitungen zu versorgen oder bei der alternativen Ausführungsform Fluid über zwei separate Fluidleitungen aus der Druckkammer abzuführen. Für den Fall des Vorsehens mehrerer mittels des Scheibenventils zu schaltender (unterschiedlicher) Zuleitungen ist es möglich, mehrere, insbesondere konzentrisch geschachtelte Druckkammern vorzusehen, insbesondere durch das, beispielsweise konzentrische Anordnen von mindestens zwei Ringdichtungen, wobei dann bevorzugt jeder Druckkammer eine dann als Fluideingangsöffnung zugeordnete Fluidöffnung in der Deckscheibe zugeordnet ist. Bevorzugt sind dabei die Druckkammern so gestaltet, dass von mindestens einer der Druckkammern, bevorzugt von sämtlichen Druckkammern bzw. des jeweils befindlichen Fluids ein Anpressdruck auf die äußere Stirnseite der Deckscheibe in einem Bereich benachbart zur jeweiligen Fluidöffnung in der Deckscheibe ausübbar ist. Eine solche Konfiguration ist auch analog realisierbar mit mehreren ausgangsseitig vorgesehenen, vorzugsweise koaxial geschachtelten Druckkammern, wobei zwei benachbarte Druckkammern über eine, insbesondere innere Ringdichtung gegeneinander in radialer Richtung abgedichtet sind, wobei sich, analog zu einer eingangsseitigen Anordnung mehrerer Druckkammern die mehreren Ringdichtungen axial an der Deckscheibe und bevorzugt gegenüberliegend axial am Ventilgehäuse abstützten.

Insgesamt ist es von besonderem Vorteil, wenn eine Fluidöffnung in der Deckscheibe, insbesondere die einzige Fluidöffnung in der Deckscheibe zentrisch, d.h. im Mittelpunkt der Deckscheibe (durchsetzt von der Rotationsachse) angeordnet ist. Bevorzugt ist es auch eine dieser Fluidöffnung zugeordnete Zuleitungs- oder Ausleitungsöffnung im Gehäuse axial fluchtend hierzu, d.h. ebenfalls konzentrisch anzuordnen.

Besonders bevorzugt ist eine Ausführungsform, bei der die Querschnittsfläche der Druckkammer und/oder der von der Elastomerdichtung umschlossener Druckflächenabschnitt, insbesondere der äußeren Stirnseite der Deckscheibe, (genauer die jeweilige axiale Projektionsfläche) aus einem Wertebereich zwischen 30mm² und 120mm², vorzugsweise zwischen 40mm² und 100mm², ganz besonders bevorzugt zwischen 50mm² und 80mm² gewählt ist oder 60mm² beträgt. Bei einer beispielhaften Fläche von 60mm² und einem angenommenen maximalen Druck des in der Druckkammer befindlichen Fluids beträgt die auf die Deckscheibe wirkende Anpresskraft 120bar. Üblicherweise ist mit Fluiddrücken in der Druckkammer zwischen etwa 1bar und 20bar, insbesondere zwischen 2bar und 19bar, bevorzugt zwischen 2bar und 16bar zu rechnen.

Besonders bevorzugt ist eine Ausführungsform der Getränkezubereitungsvorrichtung, bei der das Scheibenpaket neben der Deckscheibe und der rotierbar antreibbaren Steuerscheibe eine Rückscheibe aufweist, wobei Deckscheibe und Rückscheibe die Steuerscheibe sandwichartig zwischen sich aufnehmen. Bevorzugt sind Deckscheibe und Rückscheibe drehfest, d.h. nicht rotierbar angeordnet. Dabei bildet bevorzugt die Deckscheibe die Zulaufscheibe (Zulaufseite) des Scheibenventils und die Rückscheibe die Abströmseite, wobei, wie bereits erwähnt, auch eine umgekehrte Anströmung möglich ist, d.h. dass die Rückscheibe bzw. eine darin angeordnete Öffnung mit Fluid, insbesondere von einem Durchlauferhitzer versorgt wird und die Deckscheibe mit deckscheibenseitiger Druckammer auslassseitig angeordnet ist. Auch kann eine der Scheiben als kombinierte Zulauf- und Ablaufscheibe, insbesondere für einen Drainageanschluss dienen.

Die, bevorzugt drehfest angeordnete Rückscheibe stützt sich, bevorzugt mittelbar über mindestens eine Dichtung am Ventilgehäuse ab, wobei die mindestens eine Dichtung eine Öffnung in der Rückscheibe abdichtet. Insbesondere dann, wenn die Rückscheibe eine auslassseitige Scheibe ist, umfasst diese bevorzugt mehr als eine Fluidöffnung, um über die Deckscheibe, genauer die darin angeordnete Fluidöffnung zugeführtes Fluid an unterschiedliche Funktionseinheiten, beispielsweise eine Brüheinheit und/oder eine Düse zur Milcherwärmung und/oder Milchaufschäumung versorgen zu können. Bevorzugt ist in der Rückscheibe auch eine Drainageöffnung vorgesehen, um das an einer Drainageleitung anstehende Fluid abführen zu können.

Um eine möglichst symmetrische Anpressdruckkraftverteilung des von dem in der Druckkammer befindlichen Fluids erzeugten hydraulischen Anpressdrucks auf die Deckscheibe zu gewährleisten ist es bevorzugt, wenn eine von der Elastomerdichtung gebildete, die Druckkammer radial außen begrenzende Druckkammerinnenwand und/oder die aus der Druckkammer ausmündende Fluidöffnung in der Deckscheibe konzentrisch zur Rotationsachse des Scheibenventils angeordnet sind/ist. Mit anderen Worten ist es also bevorzugt, wenn die Druckkammer konzentrisch zur Rotationsachse angeordnet ist. Bevorzugt begrenzt die Elastomerdichtung eine einzige, insbesondere die vorerwähnte, konzentrische Druckkammer aus der ein hydraulischer Anpressdruck auf die Deckscheibe erzeugbar ist. Als besonders vorteilhaft hat sich eine Ausführungsform herausgestellt, bei der in der Deckscheibe eine einzige als Durchgangsöffnung ausgebildete Fluidöffnung vorgesehen ist, die bevorzugt mit einer einzigen deckscheibenseitigen, von der Elastomerdichtung begrenzten Druckkammer kommuniziert.

Die Erfindung führt auch auf ein Verfahren zum Betreiben einer nach dem Konzept der Erfindung ausgebildeten Getränkezubereitungsvorrichtung. Erfindungsgemäß ist vorgesehen, dass die Druckkammer mit Fluid beaufschlagt und dadurch die Deckscheibe axial in Richtung auf die Steuerscheibe (und eine ggf. zu dieser wiederum benachbarte Rückscheibe) gepresst wird. Dabei erfolgt die Fluidbeaufschlagung für den Fall der zuleitungsseitigen Anordnung der Deckscheibe über eine Verbindungsleitung bzw. Fluidleitung, insbesondere im Ventilgehäuse, während bei einer auslassseitigen Anordnung der Druckkammer die Druckbeaufschlagung der Druckkammer bevorzugt über die Fluidöffnung in der Deckscheibe erfolgt.

In Weiterbildung der Erfindung ist mit Vorteil vorgesehen, dass sich der Anpressdruck auf die Deckscheibe und damit die Dichtkraft, mit welcher die Deckscheibe gegen die benachbarte Steuerscheibe gepresst wird, proportional zum hydraulichen Druck des Fluids in der Druckkammer ändert.

Besonders zweckmäßig ist es, wenn sich eine Axialerstreckung der Druckkammer entlang der Rotationsachse mit zunehmendem Fluiddruck vergrößert, und dass der Axialzuwachs, d.h. die Axialerstreckungsdifferenz durch Expansion der Elastomerdichtung ausgeglichen wird, dass also die Elastomerdichtung unabhängig vom auftretenden Fluiddruck axial gepresst ist und für eine Abdichtung der Druckkammer Sorge trägt, indem sich die Elastomerdichtung weiterhin mit Anpressdruck axial an der Deckscheibe und sich, bevorzugt gegenüberliegend am Ventilgehäuse abstützt.

Weitere Vorteile, Merkmale und Einzelheiten der Erfindung ergeben sich aus der nachfolgenden Beschreibung eines bevorzugten Ausführungsbeispiels sowie anhand der Zeichnung.

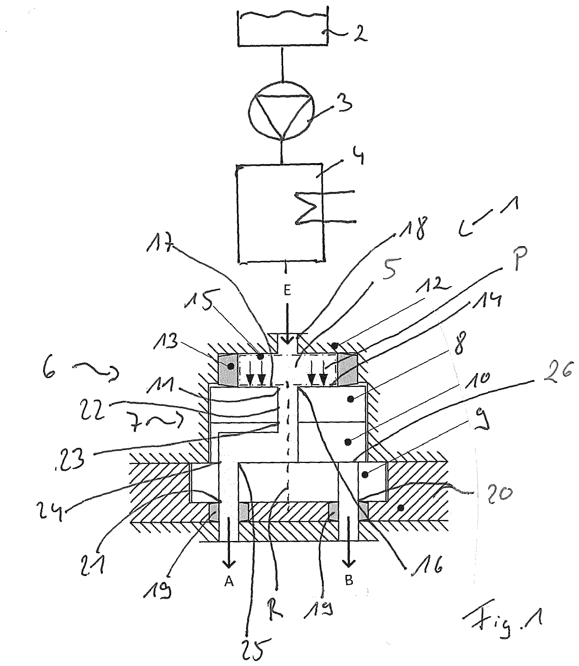

Diese zeigt in der einzigen Fig. 1 eine schematische Darstellung einer Getränkezubereitungsvorrichtung mit eine Druckkammer umfassendem Scheibenventil.

In Fig. 1 ist schematisch eine Getränkezubereitungsvorrichtung 1, beispielsweise eine Kaffeekapselmaschine oder ein Kaffeevollautomat gezeigt.

Diese umfasst Wasserversorgungsmittel 2, hier beispielhaft in Form eines Wassertanks (zusätzlich oder alternativ ein Frischwasseranschluss), aus welchem Wasser mittels einer Pumpe 3 zu einem Durchlauferhitzer 4 (zusätzlich oder alternativ zu einem Durchflusskühler) gefördert wird. Mithilfe des gezeigten Durchlauferhitzers kann je nach Ansteuerung Heißwasser oder Dampf erzeugt werden. Selbstverständlich ist es auch möglich, die Heißwasser- und Dampferzeugung auf mehrere Durchlauferhitzer zu verteilen.

In dem konkreten Ausführungsbeispiel jedenfalls strömt aus dem Durchlauferhitzer 4 Fluid 5, in Form von heißem Wasser oder Dampf zu einem als Scheibenventil 6 ausgebildeten Mehrwegeventil, welches den Fluidstrom zu unterschiedlichen Verbrauchern, beispielsweise einer Brühkammer und/oder einer Dampfdüse, bevorzugt einer Milcherwärmungs- und/oder Aufschäumeinrichtung leitet, und zwar über Ventilauslässe A, B.

Das Scheibenventil 6 umfasst klassisch ein Scheibenpaket 7, bestehend aus drei Keramikscheiben, nämlich einer äußeren und drehfest angeordneten Deckscheibe 8, einer davon abgewandten und ebenfalls äußeren sowie drehfest angeordneten Rückscheibe 9 und einer sandwichartig dazwischen aufgenommenen Steuerscheibe 10, die mittels eines nicht gezeigten Antriebs relativ zu der Deckscheibe 8 und Rückscheibe 9 zum Schalten unterschiedlicher Fluidwege rotierbar ist.

In der Deckscheibe 8 befindet sich eine als Fluideingangsöffnung ausgebildete Fluidöffnung 11, die konzentrisch angeordnet ist zu einer Rotationsachse R um die die Steuerscheibe 10 rotierbar ist. Über die Fluidöffnung 11 wird dem Scheibenpaket 7 Fluid 5, also konkret Wasser oder Dampf zugeleitet und je nach Drehwinkelstellung der Steuerscheibe 10 um die Rotationsachse R zum Ausgang A oder B und damit zu unterschiedlichen Funktionseinheiten geleitet.

Das Scheibenpaket 7 ist innerhalb eines mehrteiligen Ventilgehäuses 12 angeordnet, wobei der Deckscheibe 8 eine als Ringdichtung ausgebildete Elastomerdichtung 13 zugeordnet ist, die sich auf eine in der Zeichnungsebene oberen, von den weiteren Scheiben abgewandten äußeren Stirnseite 14 der Deckscheibe 8 abstützt. Axial gegenüberliegend stützt sich die Elastomerdichtung 13 am Ventilgehäuse 12 ab.

Radial innerhalb der Elastomerdichtung 13 bzw. in radialer Richtung begrenzt von dieser ist eine Druckkammer 15 ausgebildet, die der Deckscheibe 8 insoweit zugeordnet ist, als dass das in dieser vorhandene, d.h. diese durchströmende Fluid 5 einen Anpressdruck P in axialer Richtung parallel zur Rotationsachse R auf die Deckscheibe 8 ausüben kann.

Hierzu erstreckt sich die Druckkammer 15 in radialer Richtung über einen (äußeren) Fluidöffnungsrand 16 der Fluidöffnung 11 hinaus. In dem konkreten Ausführungsbeispiel begrenzt die Deckscheibe 8, genauer deren äußere Stirnseite 14 die Druckkammer 15 unmittelbar, und zwar mit einem benachbart zum Fluidöffnungrand 16 angeordneten Druckflächenabschnitt 17, dessen Flächenerstreckung wesentlich größer ist als die Flächenerstreckung der Querschnittsfläche (genauer der axialen Projektionsfläche) der Fluidöffnung 11, also den Eingang zu einem Fluidkanal bzw. einer Bohrung in der Deckscheibe 8.

Dem Druckflächenabschnitt 17 axial gegenüberliegend wird die Druckkammer 15 in dem konkreten Ausführungsbeispiel begrenzt unmittelbar von dem Ventilgehäuse 12, wobei, wie erwähnt, die Abdichtung bzw. Begrenzung in radialer Richtung über die Elastomerdichtung 13 realisiert ist, die unter entsprechender Dichtungspressung steht.

Versorgt wird die Druckkammer 15 mit Fluid 5 über eine als Eingangsleitung ausgebildete Verbindungsleitung 18 im Ventilgehäuse 12, die in fluidleitender Verbindung zur Pumpe 3 bzw. zum Durchlauferhitzer 4 steht.

Auf der von der Elastomerdichtung 13 abgewandten Seite stützt sich das Scheibenpaket 7, konkret die Rückscheibe 9 über Auslassdichtungen 19 in Form von Ringdichtungen am Gehäuse 12 ab und dichtet somit die beiden Auslassöffnungen 20, 21 in der Rückscheibe 9 ab.

Während des Betriebs der Getränkezubereitungsvorrichtung 1 ändert sich der hydraulische Druck des Fluids 5, beispielsweise beim Anlaufen der Förderpumpe 3 oder zur Einstellung unterschiedlicher Fluidvolumenströme (beispielsweise zur Temperatureinstellung des Fluids), gesteuert über eine die Pumpe 3 ansteuernde Logikeinheit. Damit einhergehend verändert sich der Anpressdruck A sowie die daraus resultierende Dichtkraft, mit der die Deckscheibe 8 auf die Steuerscheibe 10 und diese wiederum auf die Rückscheibe 9 gepresst wird. Aus der erfindungsgemäßen Anordnung einer Druckkammer 15 resultiert somit ein dynamisches Dichtkraftverhalten des Scheibenventils 7.

Der Fluidöffnung 11 ist ein axialer Durchgangskanal 22 in der Deckscheibe 8 zugeordnet, über welchen das Fluid 5 zu einer Steuerscheibeöffnung 23 strömen kann, wobei eine Steuerscheibenauslassöffnung 24, welche dauerhaft fluidleitend mit der Steuerscheibenöffnung 23 verbunden ist, in radialer Richtung zur Steuerscheibenöffnung 23 versetzt ist. Je nach Drehwinkelposition der Steuerscheibe 10 fluchtet die Steuerscheibenauslassöffnung 24 mit einer ersten Eingangsöffnung 25 der Rückscheibe 9 oder mit einer zweiten Eingangsöffnung 26 der Rückscheibe 9, um somit die unterschiedlichen Auslässe A und B und damit unterschiedliche Funktionseinheiten mit Fluid 5 in Abhängigkeit der Drehwinkelstellung der Steuerscheibe 10 mit Fluid 5 versorgen zu können.

### Bezugszeichen

- 1: Getränkezubereitungsvorrichtung
- 2: Wasserversorgungsmittel
- 3: Pumpe
- 4: Durchlauferhitzer
- 5: Fluid
- 6: Scheibenventil
- 7: Scheibenpaket
- 8: Deckscheibe
- 9: Rückscheibe
- 10: Steuerscheibe
- 11: Fluidöffnung
- 12: Ventilgehäuse
- 13: Elastomerdichtung
- 14: äußere Stirnseite
- 15: Druckkammer
- 16: Fluidöffnungsrand
- 17: Druckflächenabschnitt der äußeren Stirnseite
- 18: Verbindungsleitung
- 19: Auslassdichtung
- 20: Auslassöffnung
- 21: Auslassöffnung
- 22: Durchgangskanal
- 23: Steuerscheibenöffnung
- 24: Steuerscheibenauslassöffnung
- 25: erste Eingangsöffnung
- 26: zweite Eingangsöffnung
- A: Ventilauslass
- B: Ventilauslass
- R: Rotationsachse
- P: Anpressdruck

## Patentansprüche

1. Getränkezubereitungsvorrichtung (1) mit einem Scheibenventil (6), umfassend ein Ventilgehäuse (12) sowie ein darin angeordnetes Scheibenpaket (7), mit einer mindestens eine als Fluideingangsöffnung ausgebildete Fluidöffnung für Fluid (5), insbesondere Wasser und/oder Dampf, aufweisenden Deckscheibe (8) und mindestens einer auf einer von einer äußeren Stirnseite der Deckscheibe (8) abgewandten Seite der Deckscheibe (8) angeordneten Steuerscheibe (10), wobei die Steuerscheibe (10) manuell und/oder mittels eines Antriebs relativ zur Deckscheibe (8) zwischen unterschiedlichen Schaltstellungen um eine Rotationsachse (R) rotierbar ist, wobei außerhalb der Fluidöffnung (11) eine Druckkammer (15) ausgebildet ist, innerhalb derer mittels des sie durchströmenden Fluids (5) ein Anpressdruck (P) entlang der Rotationsachse (R) auf die äußere Stirnseite (14) der Deckscheibe (9) in Richtung Steuerscheibe (10) ausübbar ist, und dass die Druckkammer (15) in radialer Richtung bezogen auf die Rotationsachse (R) von einer, bevorzugt als umfangsgeschlossene Ringdichtung ausgebildeten Elastomerdichtung (13) begrenzt ist, die sich in axialer Richtung auf der der Deckscheibe (8) abstützt,
**dadurch gekennzeichnet, dass** eine von der Elastomerdichtung (13) umschlossene Druckkammerquerschnittsfläche und/oder der mit hydraulischem Druck beaufschlagbare Druckflächenabschnitt (17) der äußeren Deckscheibe (8) benachbart zur Fluidöffnung (11) mindestens 20% der axialen Projektionsfläche der Deckscheibe (8) entspricht und/oder größer ist als eine Fluidöffnungsquerschnittsfläche der Fluidöffnung (11).

2. Getränkezubereitungsvorrichtung nach Anspruch 1,
**dadurch gekennzeichnet,**
**dass** dem Scheibenventil (6) Mittel zum Variieren des hydraulischen Drucks des die Druckkammer (15) durchströmenden Fluids (5) und damit des Anpressdrucks (P) zugeordnet sind.

3. Getränkezubereitungsvorrichtung nach einem der Ansprüche 1 oder 2,
**dadurch gekennzeichnet,**
**dass** eine axiale Projektionsfläche der Druckkammer (15) zumindest abschnittsweise mit einer axialen Projektionsfläche der Deckscheibe (8) in einem Bereich benachbart der Fluideingangsöffnung zusammenfällt.

4. Getränkezubereitungsvorrichtung nach einem der Ansprüche 1 bis 3,
**dadurch gekennzeichnet,**
**dass** die äußeren Stirnseiten der Deckscheibe (8) die Druckkammer (15) in axialer Richtung mit einem von der Elastomerdichtung (13) umschlossenen Druckflächenabschnitt begrenzt, oder dass auf einem Druckflächenabschnitt (17) der äußeren Stirnseite der Deckscheibe (8) eine Druckübertragungsschicht angeordnet ist, die die Druckkammer (15) in axialer Richtung begrenzt.

5. Getränkezubereitungsvorrichtung nach einem der vorhergehenden Ansprüche,
**dadurch gekennzeichnet,**
**dass** die Elastomerdichtung (13) konzentrisch zur Rotationsachse (R) angeordnet ist.

6. Getränkezubereitungsvorrichtung nach einem der vorhergehenden Ansprüche,
**dadurch gekennzeichnet,**
**dass** eine von der Elastomerdichtung (13) gebildete Druckkammerinnenwand mit Radialabstand zu einem Fluidöffnungsrand (16) angeordnet ist.

7. Getränkezubereitungsvorrichtung nach einem der vorhergehenden Ansprüche,
**dadurch gekennzeichnet,**
**dass** eine von der Elastomerdichtung (13) umschlossene Druckkammerquerschnittsfläche und/oder der mit hydraulischem Druck beaufschlagbare Druckflächenabschnitt (17) der äußeren Deckscheibe (8) benachbart zur Fluidöffnung (11) mindestens 30%, noch weiter bevorzugt mindestens 40%, ganz besonders bevorzugt mindestens 50% der axialen Projektionsfläche der Deckscheibe (8) entspricht und/oder dass die Druckkammerquerschnittsfläche und/oder der mit hydraulischem Druck beaufschlagbare Druckflächenabschnitt (17) der äußeren Deckscheibe (8) benachbart zur Fluidöffnung (11) mindestens doppelt so groß ist, besonders bevorzugt mindestens dreimal so groß ist, noch weiter bevorzugt mindestens fünfmal so groß ist, ganz besonders bevorzugt mindestens zehnmal so groß ist, wie eine Fluidöffnungsquerschnittsfläche der Fluidöffnung (11).

8. Getränkezubereitungsvorrichtung nach einem der vorhergehenden Ansprüche,
**dadurch gekennzeichnet**
**dass** die Steuerscheibe (10) sandwichartig zwischen der Deckscheibe (8) und einer Rückscheibe (9) angeordnet ist, die mindestens eine bevorzugt als Auslass ausgebildete Öffnung, bevorzugt mindestens zwei, insbesondere jeweils als Auslass ausgebildete, Öffnungen für Fluid (5) aufweist.

9. Getränkezubereitungsvorrichtung nach Anspruch 8,
**dadurch gekennzeichnet,**
**dass** sich die, bevorzug drehfest angeordnete Rückscheibe (9), insbesondere über mindestens eine Dichtung, auf der von der Elastomerdichtung (13) abgewandten Seite des Scheibenpaktes (7) am Ventilgehäuse (12) abstützt.

10. Getränkezubereitungsvorrichtung nach einem der vorhergehenden Ansprüche,
**dadurch gekennzeichnet,**
**dass** sich die Elastomerdichtung (13) auf der von der äußeren Stirnseite abgewandten Seite an dem Ventilgehäuse (12) abstützt, welches bevorzugt die Druckkammer (15) auf der von der äußeren Stirnseite abgewandten Druckkammerseite begrenzt.

11. Getränkezubereitungsvorrichtung nach einem der vorhergehenden Ansprüche,
**dadurch gekennzeichnet,**
**dass** in dem Ventilgehäuse (12) eine Verbindungsleitung (18) zum Einleiten oder Ausleiten von Fluid (5) in die bzw. aus der Druckkammer (15), bevorzugt der Fluidöffnung in der Deckscheibe (8) gegenüberliegend, angeordnet ist.

12. Getränkezubereitungsvorrichtung nach einem der vorhergehenden Ansprüche,
**dadurch gekennzeichnet,**
**dass** eine von der Elastomerdichtung (13) gebildete Druckkammerinnenwand und/oder die, insbesondere einzige aus der Druckkammer (15) ausmündende Fluidöffnung (11) in der Deckscheibe (8) konzentrisch zur Rotationsachse (R) angeordnet sind/ist und/oder das in der Deckscheibe (8) eine einzige, als Durchgangsöffnung ausgebildete Fluidöffnung (11) angeordnet ist, und/oder dass von der Elastomerdichtung (13) eine einzige von dem Fluid durchströmbare Druckkammer (15) begrenzt ist.

13. Verfahren zum Betreiben einer Getränkezubereitungsvorrichtung (1) nach einem der vorhergehenden Ansprüche,
**dadurch gekennzeichnet,**
**dass** die Druckkammer (15) mit Fluid (5) beaufschlagt und dadurch die Deckscheibe (8) axial in Richtung auf die Steuerscheibe (10) gepresst wird.

14. Verfahren nach Anspruch 13,
**dadurch gekennzeichnet,**
**dass** sich der Anpressdruck proportional zum hydraulischen Druck des Fluids (5) in der Druckkammer (15) ändert.

15. Verfahren nach einem der Ansprüche 13 oder 14,
**dadurch gekennzeichnet,**
**dass** eine Axialerstreckung der Druckkammer (15) mit zunehmendem Fluiddruck vergrößert und dass der Axialzuwachs durch Expansion der Elastomerdichtung (13) ausgeglichen wird.

## Claims

1. A beverage preparation device (1) having a disk valve (6), comprising a valve housing (12) and a disk stack (7) disposed therein, having a cover disk (8) that has at least one fluid opening, configured as a fluid inlet opening for fluid (5), in particular water and/or steam, and having at least one control disk (10) that is disposed on a side of the cover disk (8) facing away from an outer end side of the cover disk (8), the control disk (10) being rotatable, manually and/or by means of a drive, about an axis of rotation (R) relative to the cover disk (8) between different selection positions, a pressure chamber (15) being formed outside the fluid opening (11), within which pressure chamber (15) a contact pressure (P) is exertable, by means of the fluid (5) flowing therethrough, on the outer end side (14) of the cover disk (9) along the axis of rotation (R) in the direction of the control disk (10), and that the pressure chamber (15) is limited in the radial direction with respect to the axis of rotation (R) by an elastomer seal (13), which is supported on the cover disk (8) in the axial direction,
**characterized in that**
a cross-sectional area of the pressure chamber enclosed by the elastomer seal (13) and/or the portion of the pressure surface (17), able to be loaded with hydraulic pressure, of the outer cover disk (8) adjacent to the fluid opening (11) corresponds to at least 20 % of the axial projection surface of the cover disk (8), and/or is greater than a cross-sectional area of a fluid opening of the fluid opening (11).

2. The beverage preparation device according to claim 1,
**characterized in that**
the disk valve (6) is assigned means for varying the hydraulic pressure of the fluid (5) flowing through the pressure chamber (15) and thus for varying the contact pressure (P).

3. The beverage preparation device according to claim 1 or 2,
**characterized in that**
an axial projection surface of the pressure chamber (15) coincides at least partially with an axial projection surface of the cover disk (8) in a section adjacent to the fluid inlet opening.

4. The beverage preparation device according to any one of claims 1 to 3,
**characterized in that**
the outer end sides of the cover disk (8) limit the pressure chamber (15) in the axial direction by means of a portion of the pressure surface enclosed by the elastomer seal (13), or that a pressure-transmission layer is disposed on a pressure-surface portion (17) of the outer end side of the cover disk (8), said pressure-transmission layer limiting the pressure chamber (15) in the axial direction.

5. The beverage preparation device according to any one of the preceding claims,
**characterized in that**
the elastomer seal (13) is disposed concentrically with the axis of rotation (R).

6. The beverage preparation device according to any one of the preceding claims,
**characterized in that**
an inner wall of the pressure chamber, formed by the elastomer seal (13), is disposed at a radial spacing from an edge of the fluid opening (16).

7. The beverage preparation device according to any one of the preceding claims,
**characterized in that**
a cross-sectional area of the pressure chamber enclosed by the elastomer seal (13) and/or the portion of the pressure surface (17), able to be loaded with hydraulic pressure, of the outer cover disk (8) adjacent to the fluid opening (11) corresponds to at least 30 %, more preferably at least 40 %, particularly preferably at least 50 % of the axial projection surface of the cover disk (8), and/or that the cross-sectional area of the pressure chamber and/or the portion of the pressure surface (17), able to be loaded with hydraulic pressure, of the outer cover disk (8) adjacent to the fluid opening (11) is at least twice as large, preferably at least three times as large, more preferably at least five times as large, particularly preferably at least ten times as large as a cross-sectional area of a fluid opening of the fluid opening (11).

8. The beverage preparation device according to any one of the preceding claims,
**characterized in that**
the control disk (10) is disposed in a sandwiched manner between the cover disk (8) and a rear disk (9) which has at least one opening configured as an outlet, preferably at least two openings for fluid (5), in particular each configured as an outlet.

9. The beverage preparation device according to claim 8, **characterized in that**
the rear disk (9), disposed preferably in a fixed manner, is supported on the valve housing (12), in particular via at least one seal, on the side of the disk stack (7) facing away from the elastomer seal (13).

10. The beverage preparation device according to any one of the preceding claims,
**characterized in that**
the elastomer seal (13) is supported on the valve housing (12) on the side facing away from the outer end side, said valve housing (12) limiting the pressure chamber (15) on the side of the pressure chamber facing away from the outer end side.

11. The beverage preparation device according to any one of the preceding claims,
**characterized in that**
a connecting line (18) for introducing or discharging fluid (5) into or out of the pressure chamber (15) is disposed in the valve housing (12), opposite the fluid opening in the cover disk (8).

12. The beverage preparation device according to any one of the preceding claims,
**characterized in that**
an inner wall of the pressure chamber formed by the elastomer seal (13), and/or the, in particular single, fluid opening (11) leading out of the pressure chamber (15) in the cover disk (8) is/are disposed concentrically with the axis of rotation (R), and/or that a single fluid opening (11), configured as a through-opening, is disposed in the cover disk (8), and/ or that a single pressure chamber (15), through which the fluid is able to flow, is limited by the elastomer seal (13).

13. A method for operating a beverage preparation device (1) according to any one of the preceding claims,
**characterized in that**
the pressure chamber (15) is loaded with fluid (5) and the cover disk (8) is thus pressed axially in the direction of the control disk (10).

14. The method according to claim 13,
**characterized in that**
the contact pressure changes in proportion with the hydraulic pressure of the fluid (5) in the pressure chamber (15).

15. The method according to claim 13 or 14,
**characterized in that**
an axial extension of the pressure chamber (15) increases when the fluid pressure increases, and that the axial growth is compensated by expansion of the elastomer seal (13).

## Revendications

1. Dispositif de préparation de boissons (1) comprenant une vanne à disques (6) ayant un boîtier de vanne (12) et une pile de disques (7) disposée dans ledit boîtier de vanne, la pile de disques comprenant un disque de recouvrement (8) ayant au moins un orifice de fluide pour un fluide (5), notamment de l'eau et/ou de la vapeur, réalisé comme orifice d'entrée de fluide, et comprenant au moins un disque de contrôle (10) disposé d'un côté du disque de recouvrement (8) détourné de la face frontale extérieure du disque de recouvrement (8), le disque de contrôle (10) pouvant être tourné autour d'un axe de rotation (R) entre des positions de commutation différentes par rapport au disque de recouvrement (8) de manière manuelle et/ou au moyen d'un moyen d'entraînement, une chambre de pression (15) étant réalisée à l'extérieur de l'orifice de fluide (11), une pression d'application (P) pouvant être appliquée à la face frontale extérieure (14) du disque de recouvrement (8) le long de l'axe de rotation (R) vers le disque de contrôle (10) dans ladite chambre de pression au moyen du fluide (5) qui s'écoule dans la chambre de pression, et que la chambre de pression (15) est délimitée par un joint en élastomère (13), de préférence réalisé comme joint annulaire circonférentiellement fermé, dans la direction radiale par rapport à l'axe de rotation (R), ledit joint en élastomère s'appuyant sur le disque de recouvrement (8) dans la direction axiale,
**caractérisé en ce**
**qu'**une surface de section transversale de la chambre de pression qui est entourée du joint en élastomère (13) et/ou la partie de surface de pression (17) du disque de recouvrement (8) extérieur adjacente à l'orifice de fluide (11) à laquelle une pression hydraulique peut être appliquée correspond à au moins 20 % de la surface de projection axiale du disque de recouvrement (8) et/ou est plus grande qu'une surface de section transversale de l'orifice de fluide (11).

2. Dispositif de préparation de boissons selon la revendication 1,
**caractérisé en ce que**
des moyens pour varier la pression hydraulique du fluide (5) qui s'écoule dans la chambre de pression (15) et donc la pression d'application (P) sont assignés à la vanne à disques (6).

3. Dispositif de préparation de boissons selon la revendication 1 ou la revendication 2,
**caractérisé en ce**
**qu'**une surface de projection axiale de la chambre de pression (15) coïncide, au moins partiellement, avec une surface de projection axiale du disque de recouvrement (8) dans une zone adjacente à l'orifice d'entrée de fluide.

4. Dispositif de préparation de boissons selon l'une quelconque des revendications 1 à 3,
**caractérisé en ce que**
la face frontale extérieure du disque de recouvrement (8) délimite la chambre de pression (15) dans la direction axiale au moyen d'une partie de surface de pression entourée du joint en élastomère (13), ou qu'une couche de transmission de pression est disposée sur une partie de surface de pression (17) de la face frontale extérieure du disque de recouvrement (8), ladite couche de transmission de pression délimitant la chambre de pression (15) dans la direction axiale.

5. Dispositif de préparation de boissons selon l'une quelconque des revendications précédentes,
**caractérisé en ce que**
le joint en élastomère (13) est disposé de manière concentrique par rapport à l'axe de rotation (R).

6. Dispositif de préparation de boissons selon l'une quelconque des revendications précédentes,
**caractérisé en ce**
**qu'**une paroi intérieure de la chambre de pression réalisée par le joint en élastomère (13) est espacée radialement par rapport à un bord d'orifice de fluide (16).

7. Dispositif de préparation de boissons selon l'une quelconque des revendications précédentes,
**caractérisé en ce**
**qu'**une surface de section transversale de la chambre de pression entourée du joint en élastomère (13) et/ou la partie de surface de pression (17) du disque de recouvrement (8) extérieur adjacente à l'orifice de fluide (11) à laquelle une pression hydraulique peut être appliquée correspond à au moins 30 %, de préférence au moins 40 %, plus préférentiellement au moins 50 % de la surface de projection axiale du disque de recouvrement (8) et/ou que la surface de section transversale de la chambre de pression et/ou la partie de surface de pression (17) du disque de recouvrement (8) extérieur adjacente à l'orifice de fluide (11) à laquelle une pression hydraulique peut être appliquée est au moins deux fois, de préférence au moins trois fois, plus préférentiellement au moins cinq fois, de manière particulièrement préférée au moins dix fois une surface de section transversale de l'orifice de fluide (11).

8. Dispositif de préparation de boissons selon l'une quelconque des revendications précédentes,
**caractérisé en ce que**
le disque de contrôle (10) est disposé en sandwich entre le disque de recouvrement (8) et un disque arrière (9), ledit disque arrière ayant au moins un orifice, de préférence réalisé comme sortie, de préférence au moins deux orifices, notamment réalisés comme sorties, pour un fluide (5).

9. Dispositif de préparation de boissons selon la revendication 8,
**caractérisé en ce que**
le disque arrière (9), de préférence disposé de manière fixe en rotation, s'appuie sur le boîtier de vanne (12) du côté de la pile de disques (7) détourné du joint en élastomère (13), notamment par au moins un joint.

10. Dispositif de préparation de boissons selon l'une quelconque des revendications précédentes,
**caractérisé en ce que**
le joint en élastomère (13) s'appuie sur le boîtier de vanne (12) du côté détourné de la face frontale extérieure, ledit boîtier de vanne délimitant, de préférence, la chambre de pression (15) du côté de la chambre de pression détourné de la face frontale extérieure.

11. Dispositif de préparation de boissons selon l'une quelconque des revendications précédentes,
**caractérisé en ce**
**qu'**une conduite de liaison (18) pour introduire ou évacuer du fluide (5) dans ou hors de la chambre de pression (15) est disposée dans le boîtier de vanne (12), de préférence opposée à l'orifice de fluide dans le disque de recouvrement (8).

12. Dispositif de préparation de boissons selon l'une quelconque des revendications précédentes,
**caractérisé en ce**
**qu'**une paroi intérieure de la chambre de pression réalisée par le joint en élastomère (13) et/ou le, notamment seul, orifice de fluide (11) débouchant de la chambre de pression (15) est/sont disposé/s de manière concentrique par rapport à l'axe de rotation (R) dans le disque de recouvrement (8) et/ou qu'un seul orifice de fluide (11) réalisé comme orifice de passage est disposé dans le disque de recouvrement (8), et/ou qu'une seule chambre de pression (15) qui peut être traversée par le fluide est délimitée par le joint en élastomère (13).

13. Procédé de fonctionnement d'un dispositif de préparation de boissons (1) selon l'une quelconque des revendications précédentes,
**caractérisé en ce**
**qu'**un fluide (5) est appliqué à la chambre de pression (15) et le disque de recouvrement (8) est donc pressé axialement vers le disque de contrôle (10).

14. Procédé selon la revendication 13,
**caractérisé en ce que**
la pression d'application varie de manière proportionnelle à la pression hydraulique du fluide (5) dans la chambre de pression (15).

15. Procédé selon la revendication 13 ou la revendication 14,
**caractérisé en ce**
**qu'**une extension axiale de la chambre de pression (15) est élargie quand la pression de fluide augmente et que l'augmentation axiale est compensée par une expansion du joint en élastomère (13).
